# EUROPEAN PATENT APPLICATION

(11) **EP 1 588 606 A1**
(43) Date of publication of application: **26.10.2005**
(21) Application number: 05101940.4
(22) Date of filing: 14.03.2005
(51) Int. Cl.: A01G 27/00

(54) **Liquid dispensing device for watering applications**

(30) Priority: 23.04.2004 IT PN20040028
(71) Applicant: GRUSAN di SANDRIN Giannino & C. s.a.s., 33080 Porcia (IT)
(72) Inventor: Sandrin, Giannino, 33080, Porcia (Pordenone) (IT)
(74) Representative: Giugni, Valter

(57) **Abstract**

Dispensing device (1), particularly adapted to ensure a metered discharge of water (9), possibly containing fertilizing substances added thereto, to potted plants in a dripping, i.e. drop-by-drop mode, comprising a head (4) forming an accommodation (5) adapted to receive the mouth portion (6) of a vessel (7), wherein said head (4) is provided with at least a through-opening (11) and the device (1) further comprises a metering member (10) associated to the head (4) and a passage (12) for the air establishing a communication between said at least an opening (11) and the atmosphere. The device (1) is characterized in that the metering member (10) is formed of micro-cellular spongiform material that is enclosed between the head (4) and an outer locking ring-nut (13), and in that said air passage (12) extends between said accommodation (5) and the mouth portion (6) of the vessel (7).

## Description

The present invention refers to a dispensing device, particularly adapted to ensure a metered discharge of water, possibly containing fertilizing substances added thereto, to plants both in pots and in open ground in a dripping, i.e. drop-by-drop mode.

The problem connected with automatic watering of plants, in particular potted ones, for extended periods of time is largely known and felt in the art. In view of solving it, various kinds of irrigators and watering devices have been proposed, all of which comprising substantially a vessel removably associated to a dispensing device to be inserted in the ground, or soil, and adapted to deliver a liquid in a controlled manner.

An example of such kind of watering arrangement is disclosed in the US patent application No. 5,259,142. In this case, the watering arrangement comprises a hollow stake that receives an end portion of a dispensing cap applied on to the mouth portion of the vessel. Between the cap and the mouth portion, the watering arrangement comprises a replaceable, fixed-outflow filter of a porous material, which is effective in preventing the outflow of the liquid from becoming obstructed, i.e. blocked.

A major drawback of the watering arrangement disclosed in US 5,259,142 lies in the fact that, in order to ensure the desired outflow of the liquid contained in the vessel, the need arises for an aperture to be provided in the same vessel at a site near the end portion of the vessel on the opposite side of the dispensing cap. In this manner, the air from the outside ambient will be capable of freely flowing into the vessel to compensate for, i.e. counterbalance the negative pressure being generated in the same vessel by the liquid as it outflows gradually at an anyway constant, non-adjustable rate.

The provision of such perforation in the vessel is particularly disadvantageous not only because it enables dirt and other undesired substances and matters to penetrate therethrough and eventually clog the filter and make it practically useless, but also due to the fact that it makes the operations needed to subsequently refill and re-install the same vessel quite difficult and awkward to perform. In fact, the perforation, i.e. opening provided for the air to flow into the vessel so as to facilitate liquid outflow, is ill-adapted to vessel refilling purposes and, in any case, the operation required to refill a vessel in its installed-for-use condition proves very often particularly awkward for a user to carry out.

Another drawback encountered with the watering arrangement disclosed in US 5,259,142 derives from the fact that the provision of a hole or perforation in the vessel makes it necessary for the manufacturer to either supply the watering arrangement duly provided with a suitable vessel of its own, i.e. designed for captive use, or instruct the user to provide him/herself a hole in the vessel that he/she intends to use in association with the watering device after having filled it with the liquid to be dispensed, installed onto the dispensing cap and set in the ground or soil. As a result, with the arrangement and configuration disclosed in the above-cited US patent publication, offering the sole dispensing cap on the market would prove scarcely attracting to the consumer, who, in order to make watering operative, should adapt a vessel he/she has at hand for use to that purpose. The dispensing cap, therefore, would not be ready for use by simply having it associated to any vessel whatsoever.

In an attempt to partially solve the above-noted problem, the watering arrangement disclosed in the US patent publication No. 6,684,563 has been proposed. In this arrangement, the liquid dispensing device is provided with an air passage that connects the empty portion of the liquid containing vessel with the atmosphere. A control valve enables the passage of air from the atmosphere into the interior of the liquid containing vessel to be opened or closed, so as to enable or stop the outflow of the watering liquid, respectively.

A major drawback encountered in this case derives from the fact that the air passage must necessarily be provided with a tubing that extends almost throughout the longitudinal dimension of the vessel, so as to reach up to the zone thereof that is not occupied by the watering liquid when said vessel is installed onto the liquid dispensing device. This tubing is provided in order to prevent the air passage from filling with water and, hence, the control valve becoming ineffective in controlling the inflow of air. The need for such tubing of an appropriate length to be anyway provided for the arrangement to work properly, has the effect of disadvantageously limiting the types of vessels that can be associated to the liquid dispensing device; moreover, both this tubing and the control valve add a serious complication in the construction of the whole watering arrangement.

It therefore is an object of the present invention to provide a liquid dispensing device for watering applications and a watering arrangement comprising such device, which are effective in ensuring a proper, regular outflow of the watering liquid, without any need for the liquid containing vessel to be perforated or the liquid dispensing device to be adapted for use therewith.

Within this general object as indicated above, it is a purpose of the present invention is to provide a liquid dispensing device for drop-by-drop watering applications and a watering arrangement comprising such device, which are normally in a ready-for-use condition and, at the same time, easily disassembled in order to allow for convenient cleaning of the arrangement and refilling of the vessel, as this is required periodically.

A further purpose of the present invention is to provide a liquid dispensing device and a watering arrangement comprising this device, which are simple to manufacture, and which are comprised of a lower number of parts than prior-art liquid dispensing devices and watering arrangements.

Another purpose of the present invention is to provide a liquid dispensing device and a watering arrangement comprising this device, which are capable of adapting to any vessel whatsoever, as in particular a plastic bottle of the kind commonly used to hold table water.

Yet a further purpose of the present invention is to provide a liquid dispensing device and a watering arrangement comprising this device, which enable the watering liquid, i.e. water possibly containing fertilizing substances added thereto, to be released at an adjustable flow rate so as to ensure a correct keeping of the plants, in particular potted plants.

According to the present invention, these and further aims are reached in a liquid dispensing device incorporating the characteristics as recited in the appended claim 1, and a watering arrangement comprising such device incorporating the characteristics as recited in the appended subclaims.

Anyway, features and advantages of the present invention may be more readily understood from the description that is given below by way of non-limiting example with reference to the accompanying drawings, in which:
- Figure 1 is a schematical, cross-sectional view of the liquid dispensing device according to the present invention, in a working state thereof;
- Figure 2A is an enlarged view of the detail II of Figure 1 in a first working state thereof;
- Figure 2B is an enlarged view of the detail II of Figure 1 in a second working state thereof;
- Figure 3 is a schematical, cross-sectional view along the line III-III in Figure 4 of a different embodiment of the head of the device shown in Figure 1;
- Figure 4 is a schematical, top plan view of a different embodiment of the head of the device shown in Figure 1;
- Figure 5 is a view of an item used to adjust the device according to the present invention; and
- Figure 6 is a view illustrating another application of the device according to the present invention.

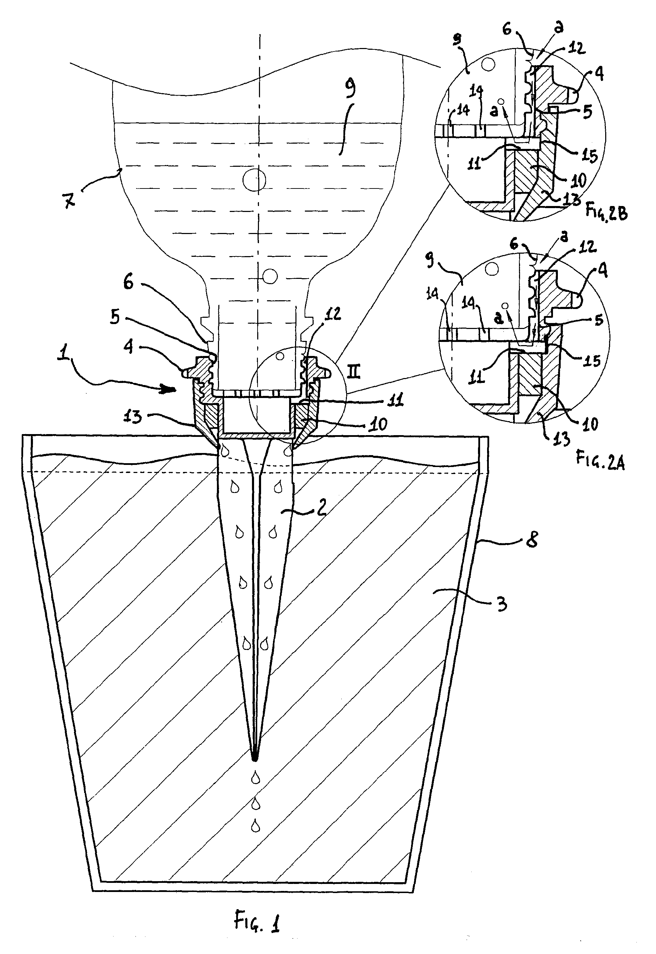

Figure 1 illustrates the liquid dispensing device 1 according to the present invention, which comprises a stake 2 having a pointed shape adapted to enable it to be fitted in the ground or soil 3. The particular shape of the stake 2 is furthermore instrumental in enabling the water delivered by the device 1 to be conveyed down into the deepest layers of the soil 3. The stake 2 is provided with a head 4, which forms an accommodation 5 adapted to receive the mouth portion 6 of a vessel 7 containing the water, as possibly added with fertilizing substances, to be delivered in a controlled manner into the soil 3, which may be possibly contained in a pot 8, in order to ensure proper keeping of one or more plants (not shown in Figure 1). In view of facilitating the use, as a vessel 7, of a plastic bottle of the kind generally used to hold table water or the like, the accommodation 5 may include inner threads capable of meshing with the threads normally provided on the mouth portion of said bottles. Through the provision of such inner threads on the wall of the accommodation 5, the stake 2 can therefore be firmly secured to the vessel 7.

The head 4 is provided with at least a through-aperture 11 aimed at both enabling the liquid to flow out from the vessel 7, and into the soil 3, and facilitating - as this shall be discussed in greater detail further on - the inflow of air from the atmosphere and into the vessel 7. It will be appreciated that the number of such through-apertures 11 to be provided to the above-indicated purpose may be selected as most appropriate in view of the particular needs and the highest flow-rate at which the watering liquid is to be delivered into the soil 3. In the case that more than just a single through-aperture 11 are provided, some of these apertures may be dedicated to the outflow of water 9 only, whereas other ones may be dedicated to also facilitate air inflow in the vessel 7.

The liquid dispensing device 1 further comprises a metering, i.e. controlled-discharge member 10, which may for instance be constituted by a ring of a micro-cellular, spongiform and water-permeable material. This controlled-discharge or metering device 10 is associated to the head 4 in a position facing said at least an aperture 11, so as to be able to receive the water from the vessel 7, and is enclosed between the head 4 and an outer locking ring-nut 13. In a preferred manner, the ring-nut 13 is connected externally to the head 4 by the meshing of corresponding threads such that a rotation of said ring-nut 13 will bring about a corresponding variation in the flow rate of the water being discharged by the device 1 by compressing the metering member 10 against the head 4, and in particular against said at least an aperture 11, or relaxing it therefrom.

In Figure 2A, the ring-nut 13 is shown in a loosened condition and the metering or controlled-discharge member 10 is in a resting, i.e. practically relaxed state. The liquid is therefore capable of freely and fully permeating the member 10 to be released therefrom and drip along the stake, thereby penetrating the soil to be watered.

In Figure 2B, the ring-nut 13 is in its tightened-down condition, so that it fully compresses the spongiform member 10 to substantially cause it to prevent the liquid from seeping therethrough, so as to stop liquid discharge.

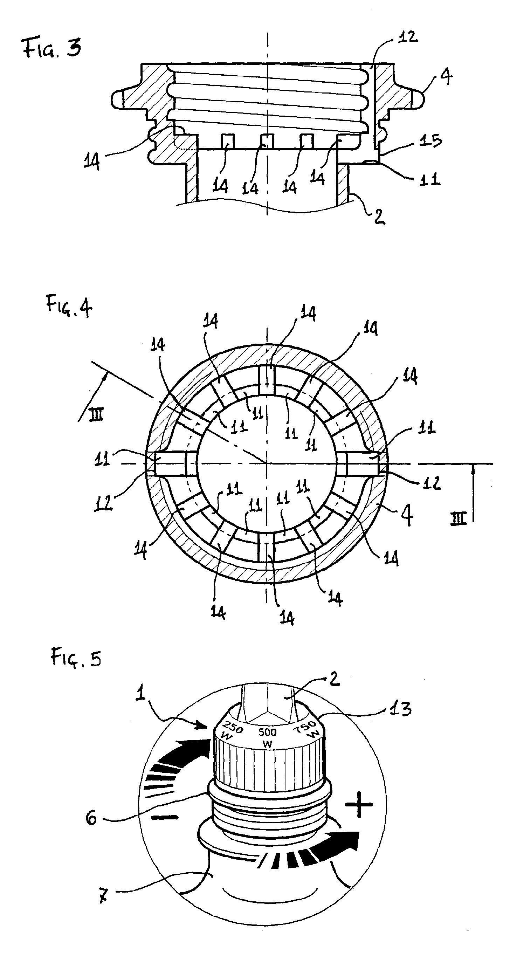

Turning the ring-nut 13 (Figure 5) in one or the other of the two directions of rotation, therefore, allows for full adjustment of the discharge rate of the watering liquid, whereas the settings concerning the amount of liquid due to be delivered in accordance with the extent to which the ring-nut is going to be tightened or loosened are marked along the outer edge of the same ring-nut for the user to be able to most properly select the desired adjustment. To illustrative purposes only, possible liquid discharge flow-rates (250 W, 500 W, 750 W), corresponding to respective amounts of water (cubic centimetres) capable of being delivered in the course of a week depending on the selected setting, are indicated on the outer surface of the ring-nut in the illustration appearing in Figure 5.

The metering or controlled-discharge member 10 is associated to the head 4 in a removable manner, so as to facilitate periodical cleaning and maintenance of the liquid dispensing device.

The inflow of atmospheric air into the hollow interior of the vessel 7 and, hence, the outflow of the liquid therefrom are ensured by the provision of an air passage 12 that allows said at least an aperture 11 to communicate with the atmosphere. This air passage 12, as this is best illustrated in Figures 2A and 2B, extends advantageously between the accommodation 5 and the mouth portion 6 of a vessel 7. The air passage 12 itself is preferably constituted by a channel that extends along the longitudinal or radial direction of the stake 2, and it may for example be formed by a kind of groove extending in a side surface of said accommodation 5.

Arrows "a" are used in Figures 2A and 2B to indicate the flow-path followed by the atmospheric air to gradually flow into the hollow interior if the vessel 7, so as to restore atmospheric pressure thereinside. When a vessel 7 is connected to the liquid dispensing device 1, thereby forming a complete watering arrangement, and when such watering arrangement is eventually put in its working state, air enters the passage 12 from the outside atmosphere to gradually flow into the interior of the vessel 7, the mouth portion 6 of which cooperates with at least a prominence 14 provided in the head 4 in a position close to said at least an aperture 11. With the help of this prominence 14, or even more of them, the mouth portion 6 is kept at a certain distance from the aperture 11, so as to prevent the air inflow and, hence, the liquid outflow from being hindered.

In order to facilitate air inflow, said at least an aperture 11 extends in the outer side surface 15 of the head 4 along the longitudinal direction thereof.

Figures 3 and 4 illustrate a different embodiment of the head 4 of the liquid dispensing device. In this embodiment, the head 4 is provided with two air passages 12, both of which are fully similar to the one described afore with reference to Figures 2A and 2B, and a plurality of apertures 11. Some of these apertures are dedicated to the outflow of water from the mouth 6 of the vessel only, whereas other ones are arranged so as to communicate with the atmosphere via the air passages 12. In particular, clearly visible in Figure 4 are the prominences 14 which, as already noted afore, are intended to enable the mouth portion 6 to be kept slightly spaced from the bottom of the accommodation 5 in view of facilitating air inflow into the vessel 7.

The actual arrangement of both the apertures 11 and the passages 12 may of course be selected so as to most appropriately fit particular needs or comply with particular application-related requirements.

From the description given above with reference to the illustrations in the accompanying drawings it can therefore be most clearly appreciated how the present invention is actually such as to enable all of the afore specified aims to be reached, in that it provides a liquid dispensing device and a watering arrangement comprising such liquid dispensing device that do not require any perforation to be made in the vessel for them to be able to work properly. It has furthermore been most clearly noticed how the liquid dispensing device and a watering arrangement comprising such liquid dispensing device according to the present invention are practically comprised of just a small number of distinct parts, so as to ensure a greatest extent of simplicity and convenience in disassembling, cleaning, re-filling and replacing the vessel and the dispensing device in general.

It goes without saying that the materials used to implement the present invention, as well as the shape and size of the individual component parts, may each time be selected so as to most appropriately fit any particular need or comply with any application-related requirement.

Moreover, it will be readily appreciated that the various parts and items constituting the liquid dispensing device and the watering arrangement comprising such liquid dispensing device according to the present invention shall not necessarily be embodied in the sole manner as described above, but can rather be inherently provided in many other embodiments and variants thereof, without departing from the scope of the present invention.

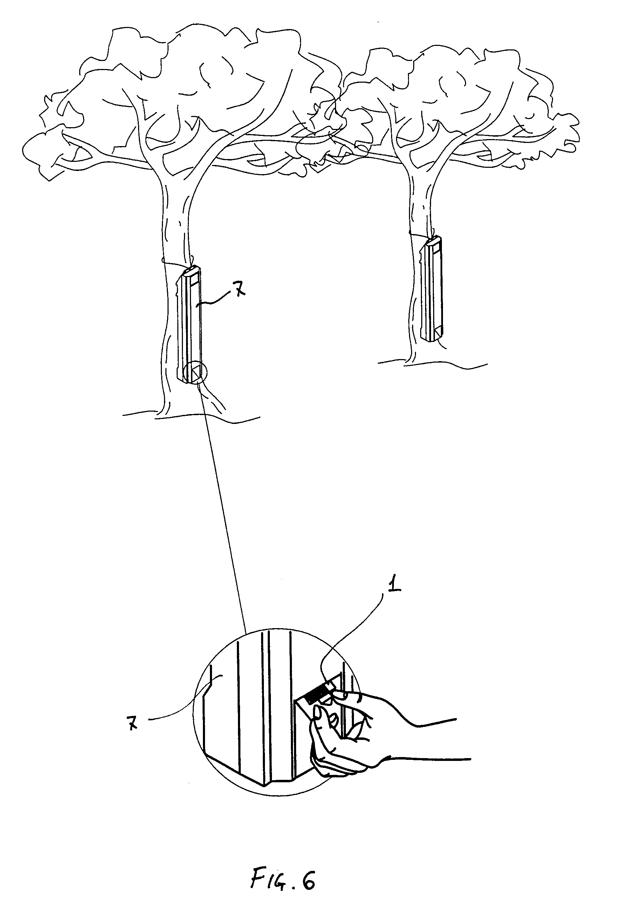

To only illustrative purposes, and by way of non-limiting example, it is to be noticed that the device according to the present invention does not necessarily require being fitted in the soil by means of a related stake. In fact, the liquid dispensing device itself, when associated to larger-volume vessels, can be used to water vines, fruit trees and similar plants. The arrangement comprising vessel and dispensing device can be hanged on the trees or mounted on proper support means, as shown in Figure 6. The inventive device turns therefore out as being very advantageous owing to its handling convenience and versatility in use.

## Claims

1. Dispensing device (1) adapted to ensure a metered discharge of water (9), possibly containing fertilizing substances added thereto, in particular to potted plants in a dripping, i.e. drop-by-drop mode, comprising
- a head (4) forming an accommodation (5) adapted to receive the mouth portion (6) of a vessel (7), wherein said head (4) is provided with at least a through-aperture (11);
- a metering or controlled-discharge member (10) associated to the head (4);
- an air passage (12) establishing a communication between said at least an aperture (11) and the atmosphere,
**characterized in that** said metering member (10) is formed of micro-cellular, spongiform and permeable material that is enclosed between the head (4) and an outer locking ring-nut (13), and **in that** said air passage (12) extends between said accommodation (5) and the mouth portion (6) of the vessel (7).

2. Dispensing device (1) according to claim 1, **characterized in that** said air passage (12) is constituted by a channel extending along the longitudinal or radial direction of said head (4).

3. Dispensing device (1) according to claim 2, **characterized in that** said channel is formed by a groove extending in a side surface of said accommodation (5).

4. Dispensing device (1) according to any of the preceding claims or combinations thereof, **characterized in that** said at least an aperture (11) extends in the outer side surface (15) of the head (4) along the longitudinal direction thereof.

5. Dispensing device (1) according to any of the preceding claims or combinations thereof, **characterized in that** said head (4) comprises at least a prominence (14) in a position close to said at least an aperture (11).

6. Dispensing device (1) according to any of the preceding claims or combinations thereof, **characterized in that** said at least an aperture (11) is arranged facing said metering member (10).

7. Dispensing device (1) according to any of the preceding claims or combinations thereof, **characterized in that** a rotation of said locking ring-nut (13) relative to the head (4) brings about a corresponding gradual variation in the flow rate of the water (9) being delivered by said device (1).

8. Dispensing device (1) according to any of the preceding claims or combinations thereof, **characterized in that** said accommodation (5) is provided with inner threads.

9. Watering arrangement comprising a vessel (7) removably associated to a liquid dispensing device (1) according to any of the preceding claims 1 to 8 or combinations thereof.

10. Watering arrangement according to claim 9, **characterized in that** said vessel (7) consists of a bottle comprising a mouth portion (6) provided with threads meshing with the inner threads of the head (4).

11. Watering arrangement according to claim 10, **characterized in that** said mouth portion (6) cooperates with said at least a prominence (14).
